# EUROPÄISCHE PATENTSCHRIFT

(11) **EP 3 622 171 B1**
(45) Veröffentlichungstag und Bekanntmachung des Hinweises auf die Patenterteilung: **21.06.2023**
(21) Anmeldenummer: 18727132.5
(22) Anmeldetag: 30.04.2018
(51) Int. Cl.: F03B 13/14, F03B 13/18, F03B 17/06, F03B 7/00

(54) **BRANDUNGSKRAFTWERK UND VERFAHREN ZUR STROMERZEUGUNG**
WAVE POWER PLANT AND METHOD FOR GENERATING ELECTRICITY
CENTRALE HOULOMOTRICE ET PROCÉDÉ DE PRODUCTION DE COURANT

(30) Priorität: 10.05.2017 DE 102017110019
(43) Veröffentlichungstag der Anmeldung: 18.03.2020
(73) Patentinhaber: Schmetzer, Alexandra, 95448 Bayreuth (DE)
(72) Erfinder:
(74) Vertreter: Lindner Blaumeier Patent- und Rechtsanwälte
(86) Internationale Anmeldenummer: PCT/DE2018/100411
(87) Internationale Veröffentlichungsnummer: WO 2018/206049

(56) Entgegenhaltungen:
- EP-A2- 2 574 771
- DE-A1- 10 058 919
- JP-A- 2001 172 950
- US-A- 3 983 404
- US-A1- 2010 237 625

## Beschreibung

Die Erfindung betrifft ein Brandungskraftwerk, umfassend ein durch Wasser einer Brandung drehbares Wasserrad, ein Tragegestell, an dem das Wasserrad drehbar gelagert ist, und einen Generator zur Bereitstellung von Strom bei einer Drehung des Wasserrades. Daneben betrifft die Erfindung ein Verfahren zur Stromerzeugung.

Methoden zur regenerativen Energiegewinnung, beispielsweise durch Photovoltaik, Windkraft oder Wasserkraft, gewinnen zunehmend an Bedeutung, da diese eine Energiebereitstellung ohne Schadstoffausstoß ermöglichen. Eine weitere Möglichkeit zur Gewinnung regenerativer Energien ist es, Gezeitenkräfte an Küsten auszunutzen. Zunehmend wird auch versucht, die kinetische Energie von Wellen zur Stromgewinnung zu nutzen. Hierzu sind verschiedene Ansätze bekannt.

Ein möglicher Ansatz ist es, die Variation in der Höhe des Wasserspiegels zu nutzen, beispielsweise indem eine Kammer vorgesehen wird, die in Abhängigkeit des durch Wellen veränderlichen Wasserspiegel mit Wasser befüllt bzw. entleert wird. Hierdurch kann eine Verdichtung von Luft in dieser Kammer erreicht werden, wonach die verdichtete Luft zur Energiegewinnung genutzt werden kann.

Ein alternativer Ansatz ist es, im Wasser liegende Rampen zu nutzen, um die kinetische Energie des Wassers zumindest zum Teil in potentielle Energie umzusetzen und diese potentielle Energie beispielsweise mit Hilfe eines Wasserrades in Strom umzusetzen. Dieser Ansatz hat den Vorteil, dass er mit relativ geringem technischen Aufwand umsetzbar ist, siehe beispielsweise das Dokument JP 2001 172950 A. Typischerweise werden hierbei jedoch nur relativ geringe Wirkungsgrade erreicht.

Der Erfindung liegt die Aufgabe zugrunde, ein demgegenüber verbessertes Brandungskraftwerk anzugeben, das trotz einem einfachen technischen Aufbau gute Wirkungsgrade erreichen kann.

Die Aufgabe wird erfindungsgemäß durch ein Brandungskraftwerk gemäß Anspruch 1 gelöst.

Erfindungsgemäß wird vorgeschlagen, das Wasser der Brandung gezielt umzulenken, so dass es nicht nur einseitig an der Drehachse vorbeigeführt wird, um das Wasserrad anzutreiben, sondern die Drehachse teilweise umströmt. Hierdurch wird erreicht, dass das Wasser das Wasserrad über eine längere Wegstrecke antreiben kann, wodurch mit einem kompakten Aufbau ein relativ großer Teil der Wellenenergie in elektrische Energie umgesetzt werden kann. Vorzugsweise ist das Umlenkelement an einer dem Land zugewandten Seite des Wasserrades angeordnet. Es kann als eine Art Anschlag für einlaufende Wellen dienen.

Die Bewegung des Wassers zur Ausbildung von Wellen im Bereich der Wasseroberfläche kann näherungsweise als eine Überlagerung von Kreisbahnen der einzelnen Wasserteilchen mit einer Gesamtdriftgeschwindigkeit des Wassers im Oberflächenbereich betrachtet werden. Würde das Wasser durch eine Rampe beispielsweise ausschließlich zu dem unteren Abschnitt eines Wasserrades geführt, um dieses anzutreiben, so könnte letztlich ausschließlich die kinetische Energie der Driftbewegung genutzt werden. Durch die erfindungsgemäße

Umlenkung und zumindest abschnittsweise Führung des Wassers um die Drehachse des Wasserrades kann auch die kinetische Energie der Rückströmung genutzt werden. Hierzu kann das Brandungskraftwerk, wie später noch detailliert erläutert werden wird, so ausgestaltet werden, dass eine einlaufende Welle oberhalb der Drehachse zu dem Wasserrad geführt wird. Durch das Umlenkelement kann es anschießend vertikal an der Drehachse vorbeigeführt werden, hierbei zusätzliche potentielle Energie an das Wasserrad abgeben und anschließend im Rahmen des Rückströmens unterhalb der Drehachse vorbeigeführt werden, um das Wasserrad weiter anzutreiben. Hierdurch kann der Wirkungsgrad eines wasserradbasierten Brandungskraftwerkes deutlich verbessert werden.

Vorzugsweise kann das Umlenkelement das Wasserrad radial teilweise umgreifen. Das Umlenkelement ist vorzugsweise gekrümmt und kann sich beispielsweise radial um die Drehachse des Wasserrads erstrecken. Die Form des Umlenkelements kann jedoch auch geringfügig oder deutlich von einer Kreissegmentform abweichen. Beispielsweise kann das Umlenkelement hyperbelförmig, parabolisch oder Ähnliches sein. Alternativ wäre es beispielsweise möglich, dass das Umlenkelement im Wesentlichen eben ist. Beispielsweise kann eine benachbart zu dem Wasserrad angeordnete ebene Platte oder eine Mauer, z. B. eine Kaimauer, als Umlenkelement verwendet werden.

Das Wasserrad kann derart gelagert sein, dass seine Drehachse im Wesentlichen parallel zu der Wasseroberfläche bzw. zu dem darunter liegenden Meeresgrund verläuft. In Axialrichtung des Wasserrades, also in Richtung der Drehachse, kann das Umlenkelement zumindest abschnittsweise parallel zu der Drehachse sein. Das Umlenkelement kann z. B. aus einem Blech oder mehreren Blechen oder aus Kunststoff bestehen.

Das Umlenkelement ist vorzugsweise an dem Tragegestell befestigt. Alternativ wäre es beispielsweise möglich, das Umlenkelement an einer Basis zu befestigen, die das Tragegestell, wie später noch erläutert werden wird, schwenkbar tragen kann. Um eine Drehung des Wasserrades nicht zu behindern, umgreift das Umlenkelement das Wasserrad vorzugsweise berührungsfrei, das heißt, es ist vom Wasserrad beabstandet angeordnet.

Das Wasserrad kann im einfachsten Fall ein Schaufelrad sein. Es kann jedoch vorteilhaft sein, ein Zellenrad zu nutzen, bei dem konkave Ausnehmungen für das Wasser vorgesehen sind. Dies ist besonders dann vorteilhaft, wenn einströmende Wellen über eine Rampe zu dem Wasserrad geführt werden, wodurch ein Teil ihrer kinetischen Energie in potentielle Energie umgesetzt wird. Wird das Wasser vertikal an der Drehachse vorbeigeführt, kann diese potentielle Energie zumindest teilweise zurückgewonnen werden, was bei einer Nutzung eines Zellenrads effizienter möglich ist. Das Wasserrad kann Schaufeln bzw. Zellen aufweisen, die sich über die gesamte Breite des Wasserrades erstrecken. In einigen Fällen kann es jedoch auch vorteilhaft sein, die Schaufeln bzw. Zellen in verschiedenen Breitenabschnitten des Wasserrades gegeneinander zu versetzen, um unter Umständen eine gleichmäßigere Drehbewegung zu erreichen.

Das erfindungsgemäße Brandungskraftwerk keinen einen sehr einfachen Aufbau aufweisen und eignet sich daher besonders gut für einen mobilen Einsatz, bei dem es nur temporär auf dem Meeresgrund im Küstenbereich angeordnet bzw. verankert wird. Um dies zu ermöglichen, kann ein Brandungskraftwerk mit relativ kleinen Abmessungen genutzt werden. Beispielsweise kann die Breite des Wasserrades, also die Ausdehnung in seiner Axialrichtung, zwischen 0,3 und 2 m sein. Das Wasserrad kann beispielsweise einen Durchmesser von 0,3 bis 3 m aufweisen. Derart kompakte Abmessungen ermöglichen es, das Brandungskraftwerk mit einer oder zwei Personen manuell im Küstenbereich zu installieren. Ein erfindungsgemäßes Brandungskraftwerk kann jedoch auch wesentlich größer dimensioniert werden. Beispielsweise kann das Wasserrad bis zu 20 m breit sein oder einen Durchmesser von bis zu 5 m aufweisen. Prinzipiell wären auch noch größere Abmessungen möglich. Die gewählte Breite des Wasserrades kann hierbei insbesondere von einer Abwägung zwischen einem Aufwand zur Installation und zur Herstellung des Brandungskraftwerkes und einer zu erreichenden Sollleistung abhängen. Der Durchmesser des Wasserrades und somit auch die weiteren Abmessungen des Brandungskraftwerks in Hochrichtung können insbesondere von den zu erwartenden Wellenhöhen im Einsatzbereich abhängen. Im Idealfall weist das Wasserrad einen Durchmesser auf, der ungefähr der Wellenhöhe zwischen Wellenkamm und Wellental entspricht.

Das Brandungskraftwerk kann aus Materialien hergestellt werden, die einen wartungsarmen Betrieb in einem Salzwasserumfeld ermöglichen. Zumindest jene Komponenten, die mit der Umgebung in Kontakt stehen, sollten somit nach Möglichkeit aus verrottungsfreien und oxidationsbeständigen Materialien, beispielsweise Kunststoff oder Aluminium, bestehen.

Der bereitgestellte Strom kann entweder lokal in dem Brandungskraftwerk, beispielsweise in einer oder mehreren Batterien, gespeichert werden, oder über ein Kabel abgeführt werden. Hierbei sollten stromführende Komponenten gegenüber der Umgebung gekapselt werden.

Das Tragegestell ist gemäß der Erfindung um eine Schwenkachse schwenkbar an einer Basis gelagert.

Die Basis kann auf dem Meeresgrund aufstehen bzw. dort befestigt sein. Durch eine Verschwenkung des Tragegestells kann die Höhe des Wasserrades bzw. seiner Drehachse über dem Meeresgrund eingestellt werden. Die Verschwenkung kann derart erfolgen, dass das Wasserrad sich während des Betriebs des Brandungskraftwerkes stets teilweise unterhalb der Wasseroberfläche befindet. Insbesondere kann die Drehachse im Wesentlichen auf der mittleren Höhe der Wasseroberfläche, also beispielsweise auf dem Durchschnitt der Höhe des Wellenkamms und des Wellentals, liegen.

Das Tragegestell bzw. die Basis können bei der Nutzung des Brandungskraftwerks derart ausgerichtet werden, dass die Schwenkachse an jenem Ende des Tragegestells bzw. der Basis liegt, die dem offenen Meer zugewandt ist. Dies ist insbesondere dann vorteilhaft, wenn das Tragegestell, wie später noch detailliert erläutert werden wird, dazu genutzt wird, eine Rampe für einlaufende Wellen bereitzustellen.

Der Schwenkwinkel zwischen dem Tragegestell und der Basis kann zumindest einseitig durch ein Anschlagelement begrenzt sein. Hierdurch kann verhindert werden, dass das Wasserrad auf der Basis bzw. auf dem Meeresgrund aufsitzt. Hierbei ist es möglich, dass der Anschlag durch eine entsprechende Bedienhandlung eines Nutzers überwindbar oder entfernbar ist, so dass beispielsweise zum Transport des Brandungskraftwerks ein kleinerer Schwenkwinkel eingestellt werden kann.

An dem Tragegestell kann wenigstens ein Schwimmkörper befestigt sein, der eine geringere Dichte als Wasser aufweist oder der mit einem Fluid befüllt oder befüllbar ist, das eine geringere Dichte als Wasser aufweist. Beispielsweise kann ein gasgefülltes, insbesondere luftgefülltes, Volumen oder ein Schaumstoff als Schwimmkörper genutzt werden. Ein entsprechend dimensionierter Schwimmkörper kann dazu genutzt werden, den Schenkwinkel automatisch so einzustellen, dass das Wasserrad bzw. seine Drehachse allein aufgrund des Auftriebs in die gewünschte Lage bezüglich der Wasseroberfläche gebracht wird. Beispielsweise kann der Schwimmkörper so dimensioniert werden bzw. ein entsprechendes Material für den Schwimmkörper genutzt werden, dass das Wasserrad zum Teil, insbesondere bis zur Hälfte bzw. bis zur Drehachse des Wasserrades unterhalb der Wasseroberfläche liegt. Der Schwimmkörper kann insbesondere näher an der Drehachse des Wasserrades als an der Schwenkachse des Tragegestells angeordnet sein.

Wären das Tragegestell bzw. die daran angeordneten Komponenten masselos, so würde eine Vorgabe des Schwenkwinkels durch den Schwimmkörper dazu führen, dass sich im Wesentlichen stets der gleiche Teil des Tragegestells und der daran angeordneten Komponenten unterhalb der Wasseroberfläche befindet. Wie bereits vorangehend erläutert, ist es jedoch ideal, wenn der Schwenkwinkel so eingestellt wird, dass die Drehachse bzw. die Mitte des Wasserrades ungefähr auf einer Höhe liegt, die der mittleren Wasserstandshöhe zwischen den Wellenbergen und den Wellentälern entspricht. Dies kann näherungsweise bereits durch die Masse des Tragegestells und der daran angeordneten Komponenten realisiert werden. Aufgrund der Massenträgheit dieser Komponenten wird der Schwenkwinkel durch die Schwimmkörper nicht instantan sondern mit einer gewissen Zeitverzögerung eingestellt. Dies entspricht einer Bedämpfung der durch die Wellen verursachten Schwingung, wodurch die Amplitude der Höhenschwingung des Wasserrades verringert wird. Je nach Amplitude und Frequenz der Wellen kann es hierbei vorteilhaft sein, die Verschwenkung des Tragegestells zusätzlich zu bedämpfen, beispielsweise durch eine hydraulische Dämpfung. Hierdurch kann die Schwingungsamplitude der Höhe des Wasserrades weiter reduziert werden, womit der Abstand des Wasserrades und somit der Drehachse von dem Meeresgrund bzw. der Basis im Wesentlichen von dem mittleren Wasserspiegel abhängt.

An dem Tragegestell kann ein wasserdichter Ballastbehälter angebracht sein. Beispielsweise kann eine wasserdichte Dose oder Flasche als Ballastbehälter genutzt werden. Der Ballastbehälter kann mit Wasser oder anderem Ballast befüllt werden, um die Lage des Wasserrades bzw. der Drehachse zu der Wasseroberfläche einzustellen. Hierdurch wird es ermöglicht, das Brandungskraftwerk mit geringem Aufwand an eine tatsächliche Nutzungssituation anzupassen.

Alternativ oder ergänzend zu der Einstellung des Schwenkwinkels über den Schwimmkörper und optional einen zusätzlichen Ballast wäre es prinzipiell auch möglich, einen festen Schwenkwinkel nutzerseitig vorzugeben oder wenigstens einen Aktor am Brandungskraftwerk vorzusehen, über den der Schwenkwinkel einstellbar ist. Zur Steuerung des Aktors kann beispielsweise eine entsprechende Steuereinrichtung und Sensorik am Brandungskraftwerk vorgesehen werden, die beispielsweise die relative Lage eines oder mehrerer Sensorelemente am Tragegestell bezüglich der Wasseroberfläche misst bzw. ermittelt, ob diese Sensoren oberhalb oder unterhalb der Wasseroberfläche liegen und in Abhängigkeit hiervon den Aktor ansteuert. Hierbei ist es möglich, den zeitlichen Verlauf dieser Messwerte zu berücksichtigen und beispielsweise eine mittlere Wasserhöhe zur Steuerung zu nutzen.

Das Umlenkelement kann zumindest abschnittsweise an einer von der Schwenkachse abgewandten Seite des Wasserrades angeordnet sein. Wie bereits vorangehend erläutert, kann das Brandungskraftwerk derart am Meeresgrund angeordnet werden, dass die Seite des Tragegestells, an der die Schwenkachse angeordnet wird, dem offenen Meer zugewandt ist. Das Umlenkelement kann somit derart angeordnet werden, dass es an der der Küste zugewandten Seite des Wasserrades liegt. Hierdurch können einlaufende Wellen, nachdem sie an dem Wasserrad, insbesondere an der Oberseite des Wasserrades, vorbeigeströmt sind, durch das Umlenkelement umgelenkt werden.

Die Schwenkachse verläuft parallel zu der Drehachse des Wasserrads. Eine derartige Anordnung ermöglicht es, die Drehachse parallel zum Meeresgrund bzw. zur Wasseroberfläche zu verschwenken.

Zwischen der Schwenkachse und dem Wasserrad ist gemäß der Erfindung 11 ein plattenförmiges Leitelement an dem Tragegestell befestigt.

Das Leitelement kann sich parallel zu der Drehachse des Wasserrades erstrecken. Die Breite des Leitelements in Axialrichtung des Wasserrades kann wenigstens 50 %, vorzugsweise wenigstens 90 % der Breite des Wasserrades sein oder sich zumindest abschnittsweise über die Breite des Wasserrads hinausstrecken. Das Leitelement kann vorzugsweise gewinkelt zur Wasseroberfläche stehen und beim Betrieb des Brandungskraftwerks als Rampe für einlaufende Wellen dienen. Dies kann beispielsweise dadurch realisiert werden, dass das Leitelement parallel zu einer durch die Drehachse des Wasserrades und die Schwenkachse des Tragegestells aufgespannten Ebene verläuft. Beispielsweise kann das Leitelement an Trägern des Tragegestells angebracht sein, die sich im Wesentlichen geradelinig von der Basis bis zu einer Welle des Wasserrades erstrecken. Die Drehachse des Wasserrades kann vorzugsweise auf oder unterhalb einer Ebene liegen, in der das Leitelement liegt. Dies kann dazu führen, dass das Wasser einlaufender Wellen oberhalb der Drehachse des Wasserrades zu dem Wasserrad geführt wird. Das Wasserrad kann somit in Drehung versetzt werden, indem es oberhalb der Drehachse durch einlaufende Wellen in Richtung des Ufers bewegt wird und unterhalb der Drehachse durch rückfließendes bzw. durch das Umlenkelement umgelenktes Wasser in Richtung des offenen Meeres bewegt wird.

Bei der vorangehend beschriebenen Nutzung des Leitelements kann nachteilig sein, dass es als Hindernis für Wasser dienen kann, das am Wasserrad vorbei in Richtung des offenen Meeres fließen soll. Durch dieses Aufstauen kann die Flussgeschwindigkeit im Bereich des Wasserrades verringert und somit die generierbare Strommenge reduziert werden. Um dem entgegenzuwirken, ist das Leitelement verschwenkbar an dem Tragegestell befestigt.

Die Leitelementschwenkachse kann an der von der Schwenkachse des Tragegestells abgewandten Seite des Leitelements liegen, das heißt, in der Nutzungsposition des Brandungskraftwerkes im oberen Teil des Leitelements. Das untere Ende des Leitelements kann somit durch rückströmendes Wasser angehoben werden, wenn das Brandungskraftwerk im Bereich eines Wellentales liegt. Läuft ein Wellenberg ein, so wird das Leitelement durch die einlaufende Welle auf das Tragegestell gedrückt und wirkt als Rampe für die Welle.

Das Brandungskraftwerk kann einen oberen Trichter in einem Bereich oberhalb des Leitelements aufweisen, der sich zu seiner von dem Wasserrad abgewandten Seite öffnet. Der obere Trichter kann sich insbesondere in Richtung der Schwenkachse des Tragegestells erstrecken und öffnen. Als Bereich oberhalb des Leitelements kann insbesondere ein Bereich verstanden werden, der auf der von der Basis abgewandten Seite jene Ebene liegt, in der das Leitelement liegt. Der obere Trichter kann ergänzend oder alternativ zumindest abschnittsweise oberhalb der Drehachse des Wasserrades liegen. Durch den Trichter kann Wasser von einlaufenden Wellen gesammelt und dem Wasserrad zugeführt werden.

Ergänzend oder alternativ kann in einem Bereich unterhalb der Drehachse des Wasserrades ein unterer Trichter vorgesehen sein, der sich zu seiner von dem Wasserrad abgewandten Seite öffnet. Der obere und der untere Trichter öffnen sich vorzugsweise in einander entgegengesetzte Richtungen bzw. sind an einander gegenüberliegenden Seiten des Wasserrades angeordnet. Bei der bereits vorangehend beschriebenen Anordnung des Brandungskraftwerkes im Meer kann sich der untere Trichter im unteren Bereich des Brandungskraftwerkes zur Landseite hin öffnen und somit rückströmendes Wasser aus einem Bereich, der breiter ist als das Wasserrad, zum unteren Bereich des Wasserrades führen, um dieses anzutreiben.

Das Wasserrad kann über ein Getriebe mit dem Generator gekoppelt sein und/oder der Generator kann mehrere Polpaare aufweisen. Das Wasserrad dreht sich in Abhängigkeit der konkreten Betriebsbedingungen mit unterschiedlichen Drehzahlen. Der im Generator erzeugte Strom sollte daher typischerweise gleichgerichtet oder auf eine feste Frequenz umgerichtet werden. Ein durch Wellen angetriebenes Wasserrad wird typischerweise relativ geringe Drehzahlen aufweisen. Zum Um- bzw. Gleichrichten ist es typischerweise jedoch vorteilhaft, Strom mit höheren Frequenzen von beispielsweise wenigstens 10 Hz zu nutzen.

Entsprechende Frequenzen können erreicht werden, indem die Drehzahl des Generators über ein Getriebe erhöht wird, das ein Übersetzungsverhältnis kleiner 1 aufweist, und/oder indem ein Generator mit mehreren Polpaaren genutzt wird, womit mit jeder Umdrehung des Wasserrades mehrere Stromoszillationen resultieren.

Vorzugsweise weist das Wasserrad eine Rücklaufsperre auf, die eine Drehung entgegen einer Solldrehrichtung blockiert und/oder es ist über einen Freilauf mit dem Generator gekoppelt. Aufgrund des Freilaufs kann eine Momentübertragung zwischen Wasserrad und Generator nur bei einer Drehrichtung des Wasserrades erfolgen. Durch das beschriebene Vorgehen wird eine eindeutige Drehrichtung für das Wasserrad bzw. den Generator und somit eine gleichmäßige Drehung erreicht. Eine gleichmäßige Drehung des Wasserrads kann ergänzend oder alternativ auch dadurch erreicht werden, dass ein Wasserrad mit einem hohen Trägheitsmoment genutzt wird oder dass zusätzliche Schwungmassen bzw. ein zusätzliches Schwungrad mit dem Wasserrad gekoppelt werden. Insbesondere kann ein Schwungrad über einen Freilauf mit dem Wasserrad gekoppelt sein. Durch das beschriebene Vorgehen wird erreicht, dass die generierte Strommenge nur langsam variiert, was die weitere Stromkonditionierung bzw. Speicherung erleichtern kann.

Neben dem erfindungsgemäßen Brandungskraftwerk betrifft die Erfindung ein Verfahren zur Stromerzeugung, wobei ein Tragegestell eines erfindungsgemäßen Brandungskraftwerks an einem Meeresgrund derart verankert oder durch die oder eine an dem Meeresgrund angeordnete Basis derart gehaltert wird, dass einströmende Wellen und/oder rückströmendes Meerwasser das Wasserrad antreiben, wobei der Generator durch das Wasserrad angetrieben wird, um Strom zu erzeugen. Das Brandungskraftwerk kann derart angeordnet werden, dass die Drehachse des Wasserrades im Wesentlichen parallel zur Küstenlinie bzw. zu einer Höhenlinie des Meeresgrundes bzw. senkrecht zu einer erwarteten Einströmrichtung der Wellen liegt. Ergänzend oder alternativ kann die Anordnung so gewählt werden, dass die Seite des Tragegestells, an der das Wasserrad angeordnet ist der Küste zugewandt ist. Entsprechend kann jene Seite des Tragegestells, an der es mit dem Meeresgrund bzw. der Basis verbunden ist, dem offenen Meer zugewandt sein.

Durch eine Anpassung einer Ballastmenge oder von Schwimmern kann die Verschwenkung des Tragegestells bezüglich der Basis bzw. des Meeresgrundes so eingestellt werden, dass das Wasserrad zumindest teilweise unterhalb der Wasseroberfläche liegt. Insbesondere wird die Verschwenkung so eingestellt, dass die Drehachse des Wasserrades im zeitlichen Mittel auf der durchschnittlichen Höhe der Wasseroberfläche zwischen Wellenbergen und Wellentälern liegt.

Weitere Vorteile und Einzelheiten der Erfindung ergeben sich aus den folgenden Ausführungsbeispielen sowie den zugehörigen Zeichnungen. Hierbei zeigen schematisch:
- Fig. 1 und Fig. 2: ein Ausführungsbeispiel des erfindungsgemäßen Brandungskraftwerks aus verschiedenen Blickwinkeln, und
- Fig. 3: die Nutzung eines alternativen Ausführungsbeispiels des erfindungsgemäßen Brandungskraftwerks zur Stromerzeugung für einen Verbraucher.

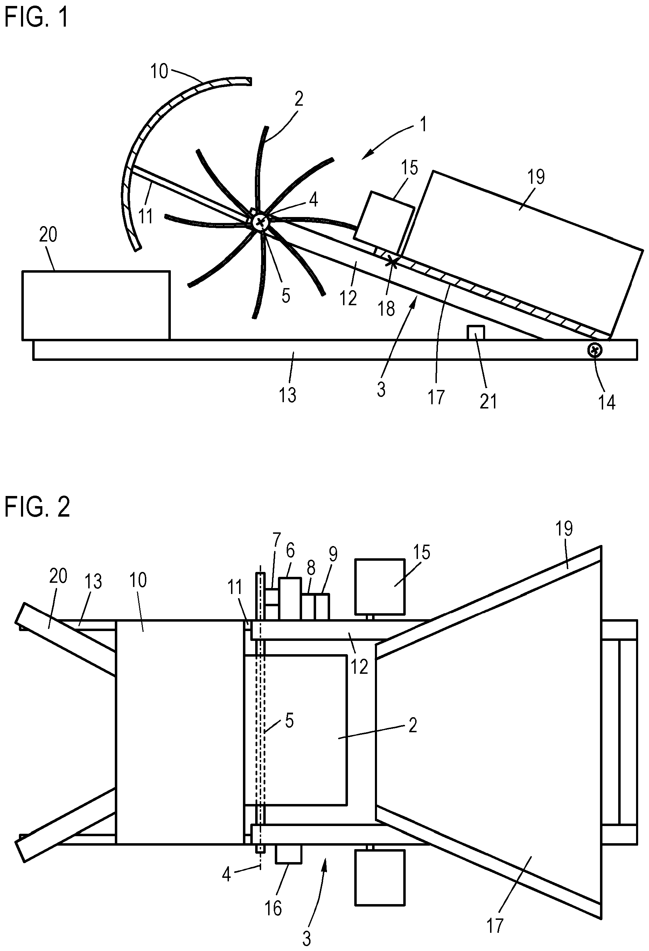

Die Figuren 1 und 2 zeigen verschiedene Ansichten eines Brandungskraftwerks 1, das verwendet werden kann, um durch Nutzung der Brandungs- bzw. Wellenkräfte Strom zu erzeugen. Hierbei zeigt Fig. 1 eine geschnittene Seitenansicht und Fig. 2 eine Draufsicht. In beiden Figuren ist im Betrieb die rechte Seite des Brandungskraftwerks 1 dem offenen Meer zugewandt und die linke Seite der Küste.

Das Brandungskraftwerk 1 umfasst ein durch Wasser der Brandung drehbares Wasserrad 2, das an einem Tragegestell 3 drehbar gelagert ist. Die Welle 5 des Wasserrades 2 wird hierbei durch Ausnehmungen der Träger 12 des Tragegestells 3 geführt, womit das Wasserrad 2 um die Drehachse 4 drehbar gelagert ist.

Bei einer von rechts, also vom offenen Meer, einlaufenden Welle, kann die Bewegung des Wassers in Oberflächennähe als Überlagerung einer Kreisbewegung der Wasserteilchen mit einer Gesamtbewegung angesehen werden, die je nach Strömungsbereich zur Küste hin oder von dieser weggerichtet ist. Jener Teil der Kreisbewegung des Wassers, der zur Küste hin, also im Bild nach links gerichtet ist, erfolgt im Bereich der Wellenberge. Eine umgekehrte Bewegung erfolgt im Bereich der Wellentäler. Hierbei ist die Bewegung im Bereich der Wasseroberfläche weit stärker ausgeprägt als in tieferliegenden Wasserschichten. Dies wird im Brandungskraftwerk 1 dadurch ausgenutzt, dass das Wasserrad 2 ungefähr so positioniert wird, dass die Drehachse 4 des Wasserrades 2 auf der durchschnittlichen Höhe zwischen Wellenberg und Wellental liegt. Befindet sich das Wasserrad 2 somit im Bereich eines Wellenberges, so wird auf den oberen Bereich des Wasserrades, der in diesem Fall zumindest teilweise unterhalb der Wasseroberfläche liegt, eine Kraft nach links ausgeübt. Liegt das Wasserrad hingegen im Bereich eines Wellentales, so liegt der obere Teil der Wasserrades 2 oberhalb der Drehachse 4 frei und auf den unteren Teil des Wasserrades wirkt eine Kraft nach rechts durch das rückfließende Wasser. Dadurch wird insgesamt eine Drehbewegung des Wasserrades 2 erzeugt.

Die Welle 5 des Wasserrades ist über ein Getriebe 7 mit einem Generator 6 gekoppelt, der vorzugsweise mehrere Polpaare aufweist. Das Getriebe 7 übersetzt die Drehbewegung, so dass der Rotor des Generators 6 schneller rotiert als das Wasserrad. Der durch den Generator 7 bereitgestellte Wechselstrom wird durch den Umrichter 8 gleichgerichtet und zum Laden der Batterie 9 verwendet. Die stromführenden Komponenten sind gegen das Meerwasser gekapselt. Die Batterie 9 kann nach dem Laden entnommen werden, um die durch das Brandungskraftwerk 1 gewonnene Energie zu nutzen.

Um den Wirkungsgrad des Brandungskraftwerkes 1 zu erhöhen, wird ein Umlenkelement 10 genutzt, das das Wasserrad 2 radial teilweise umgreift und das einströmende Wasser um die Drehachse 4 des Wasserrades 2 führt. Dies ist vorteilhaft, da die kinetische und potentielle Energie von einströmenden Wellenbergen bei einem reinen Überströmen des Wasserrades 2 nur zu einem geringen Teil auf das Wasserrad 2 übertragen werden kann. Durch die Nutzung des Umlenkelements 10 wird das Wasser über eine längere Strecke entlang dem Wasserrad geführt und kann somit einen größeren Teil seiner Energie auf das Wasserrad 2 übertragen. Das Umlenkelement 10 ist über eine Strebe 11 drehfest mit dem Tragegestell 3 gekoppelt. In einem alternativen Ausführungsbeispiel könnte auch ein ebenes und/oder separat von dem Tragegestell 3 ausgebildetes Umlenkelement verwendet werden. Beispielsweise könnte eine ohnehin vorhandene Kaimauer als Umlenkelement dienen.

Das Tragegestell 3 ist um eine Schwenkachse 14 drehbar an einer Basis 13 gelagert. Durch ein Verschwenken des Tragegestells 3 bezüglich der Basis 13 kann eine vertikale Position des Wasserrades 2 eingestellt werden. Hierbei werden Schwimmkörper 15 genutzt, die an dem Tragegestell 3 angebracht sind, um diese Höheneinstellung automatisch durch den Auftrieb der Schwimmkörper 15 vorzunehmen. Als Schwimmkörper 15 können beispielsweise gasgefüllte Ballons oder Schaumstoffblöcke genutzt werden. Um eine Anpassung des Auftriebs an die konkreten Nutzungsbedingungen zu ermöglichen, sind an dem Tragegestell 3 zudem die wasserdichten Ballastbehälter 15 angebracht, bei denen es sich beispielsweise um wasserdichte Dosen handeln kann, die mit Erde, Sand oder Wasser befüllt werden können, um die vertikale Position des Wasserrades 2 an die Nutzungsbedingungen anzupassen.

Die Einstellung eines Schwenkwinkels des Tragegestells 3 bezüglich der Basis 13 über die Schwimmkörper 15 und optional den Ballastbehälter 16 führt dazu, dass der Schwenkwinkel und somit die vertikale Position des Wasserrades 2 der Wellenbewegung folgt. Aufgrund der Trägheit des Tragegestells 3 mit den daran angebrachten Aufbauten folgt der Schwenkwinkel dieser Wellenbewegung jedoch verzögert, womit die vertikale Verschiebung des Wasserrades 2 deutlich kleiner ist als die Amplitude der Wellen. Somit kann bei nicht allzu niedrigen Wellenfrequenzen eine ausreichend konstante Vertikalposition des Wasserrades 2 erreicht werden, so dass im Bereich der Wellentäler zumindest ein Teil des Wasserrades 2, der oberhalb der Drehachse 4 liegt, oberhalb der Wasseroberfläche liegt, während er im Bereich der Wellenberge unterhalb der Wasseroberfläche liegt. Falls erforderlich kann die Schwenkbewegung um die Schwenkachse 14 zusätzlich bedämpft werden, beispielsweise indem ein hydraulischer Dämpfer vorgesehen wird, um die Vertikalbewegung des Wasserrades 2 aufgrund der Wellen zu reduzieren.

Der Wirkungsgrad des Brandungskraftwerkes 1 kann weiter erhöht werden, wenn einlaufende Wellen primär dem oberen Teil des Wasserrades 2 zugeführt werden. Dies wird dadurch erreicht, dass zwischen der Schwenkachse 14 und dem Wasserrad 2 ein plattenförmiges Leitelement 17 angeordnet wird, das als Rampe für einlaufende Wellen wirkt. Um sicherzustellen, dass das Leitelement 17 den Rückfluss des Wassers nicht behindert, wodurch die Strömungsgeschwindigkeit an der Unterseite des Wasserrades 2 und somit der Wirkungsgrad des Brandungskraftwerkes 1 reduziert werden könnte, ist das Leitelement 17 derart am Tragegestell 3 befestigt, dass es um die Schwenkachse 18 verschwenkbar ist. Beispielsweise kann es an Zapfen gelagert sein, die in die Streben 12 des Tragegestells 3 eingreifen.

Die erzeugbare Strommenge könnte dadurch erhöht werden, dass die Breite des Wasserrades senkrecht zur Bildrichtung in Fig. 1 erhöht würde. Dies ist jedoch nicht in allen Fällen möglich, da ein breites Wasserrad 2 zu einem hohen Gewicht und zu großen Ausdehnungen des Brandungskraftwerks 1 führt, was insbesondere dann nachteilig ist, wenn das Brandungskraftwerk 1 mobil genutzt werden soll, also wiederholt auf- und abgebaut werden soll. Um dennoch die kinetische Energie von Wasser eines größeren Bereichs zu nutzen, weist das Brandungskraftwerk 1 einen oberen Trichter 19 auf, der oberhalb des Leitelements 17 angeordnet ist und einlaufende Wellen in den Bereich des Wasserrades 2 führt. Für in Richtung des offenen Meeres rückströmendes Wasser ist zum gleichen Zweck ein unterer Trichter 20 vorgesehen, der sich zur Küste hin öffnet und unterhalb der Drehachse 4 des Wasserrades 2 angeordnet ist.

Um zu verhindern, dass das Wasserrad 2 auf der Basis 13 bzw. auf dem Meeresgrund aufsetzt, weist das Brandungskraftwerk 1 einen Anschlag 21 auf, auf dem das Tragegestell 3 bei kleinen Schwenkwinkeln aufsetzt. Es ist möglich, dass dieser Anschlag 21 fest an der Basis 13 oder am Tragegestell 3 vorgesehen ist. Vorzugsweise kann der Anschlag 21 jedoch durch eine Bedienhandlung eines Nutzers überwunden oder von dem Brandungskraftwerk 1 demontiert werden, um beispielsweise für einen Transport des Brandungskraftwerkes 1 kleinere Schwenkwinkel zwischen Basis 13 und Tragegestell 3 und somit kleinere Abmessungen des Brandungskraftwerkes 1 zu ermöglichen.

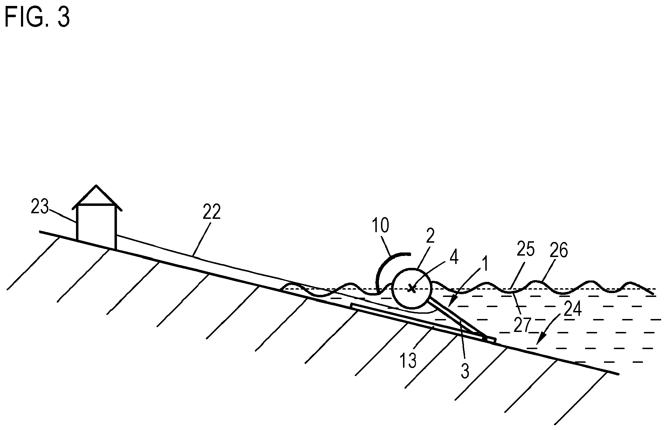

Fig. 3 zeigt die Nutzung eines gegenüber dem in Fig. 1 und 2 gezeigten Brandungskraftwerks 1 geringfügig abgewandelten Brandungskraftwerkes 1 zur Stromgewinnung. Der einzige Unterschied zwischen dem hier genutzten Brandungskraftwerk 1 und dem vorangehend beschriebenen Brandungskraftwerk 1 ist, dass anstelle einer lokalen Batterie 9 zur Stromspeicherung direkt eine Stromleitung 22 verwendet wird, um einen landseitigen Verbraucher 23 mit Energie zu versorgen. Hierbei ist selbstverständlich darauf zu achten, dass die Stromleitung 22 sowie ihre Anschlüsse ausreichend gegen das Meerwasser isoliert sind.

Um das Brandungskraftwerk 1 zu nutzen, wird seine Basis 13 am Meeresgrund 24 verankert. Hierbei kann das Eigengewicht des Brandungskraftwerkes 1 ausreichend sein, um eine stabile Lage des Brandungskraftwerkes 1 am Meeresgrund 24 sicherzustellen. Es ist jedoch auch möglich, dass das Brandungskraftwerk 1 am Meeresgrund durch Heringe, Schrauben, Zusatzgewichte oder Ähnliches gesichert wird.

Durch den in Fig. 3 nicht dargestellten Schwimmer und eine optionale Nutzung von Ballast wird ein Schwenkwinkel zwischen dem Tragegestell 3 und der Basis 13 so eingestellt, dass die Drehachse 4 des Wasserrades 2 auf der gleichen Höhe über dem Meeresgrund 24 liegt wie der durch die gestrichelte Linie 25 dargestellte durchschnittliche Wasserspiegel zwischen den Wellenbergen 26 und den Wellentälern 27.

Durch die von dem offenen Meer einlaufenden Wellen und das rückströmende Wasser wird das Wasserrad 2 somit, bei ausreichendem Trägheitsmoment des Wasserrades 2, im Wesentlichen kontinuierlich gegen den Uhrzeigersinn gedreht. Um die kontinuierliche Rotation des Generators 6 weiter zu verbessern bzw. eine Drehung in Gegenrichtung zu verhindern, kann das Wasserrad 2 eine Rücklaufsperre aufweisen, die eine Drehung im Uhrzeigersinn sperrt. Alternativ oder ergänzend kann zwischen dem Generator 6 und der Welle 5 des Wasserrades 2 ein Freilauf genutzt werden, der beispielsweise als Teil des Getriebes 7 ausgebildet sein kann, so dass eine Drehmomentübertragung zwischen dem Wasserrad 2 und dem Generator 6 nur bei einer Drehung des Wasserrades 2 entgegen dem Uhrzeigersinn in Fig. 3 möglich ist.

## Patentansprüche

1. Brandungskraftwerk, umfassend ein durch Wasser einer Brandung drehbares Wasserrad (2), ein Tragegestell (3), an dem das Wasserrad (2) drehbar gelagert ist, und einen Generator (6) zur Bereitstellung von Strom bei einer Drehung des Wasserrades (2), wobei das Brandungskraftwerk (1) ein Umlenkelement (10) zur Führung des Wassers um eine Drehachse (4) des Wasserrads (2) aufweist, wobei das Tragegestell (3) um eine Schwenkachse (14) schwenkbar an einer Basis (13) gelagert ist, wobei die Schwenkachse (14) parallel zu der Drehachse (4) des Wasserrades (2) verläuft, wobei zwischen der Schwenkachse (14) und dem Wasserrad (2) ein plattenförmiges Leitelement (17) an dem Tragegestell (3) befestigt ist, **dadurch gekennzeichnet, dass** das Leitelement (17) verschwenkbar an dem Tragegestell (3) befestigt ist.

2. Brandungskraftwerk nach Anspruch 1, **dadurch gekennzeichnet, dass** das Umlenkelement (10) das Wasserrad (2) radial teilweise umgreift.

3. Brandungskraftwerk nach einem der vorangehenden Ansprüche, **dadurch gekennzeichnet, dass** an dem Tragegestell (3) wenigstens ein Schwimmkörper (15) befestigt ist, der eine geringere Dichte als Wasser aufweist oder der mit einem Fluid befüllt oder befüllbar ist, das eine geringere Dichte als Wasser aufweist.

4. Brandungskraftwerk nach Anspruch 3, **dadurch gekennzeichnet, dass** an dem Tragegestell (3) ein wasserdichter Ballastbehälter (16) angebracht ist.

5. Brandungskraftwerk nach einem der vorangehenden Ansprüche, **dadurch gekennzeichnet, dass** das Umlenkelement (10) zumindest abschnittsweise an einer von der Schwenkachse (14) abgewandten Seite des Wasserrades (2) angeordnet ist.

6. Brandungskraftwerk nach einem der vorangehenden Ansprüche, **dadurch gekennzeichnet, dass** es einen oberen Trichter (19) in einem Bereich oberhalb des Leitelements (17) aufweist, der sich zu seiner von dem Wasserrad (2) abgewandten Seite öffnet.

7. Brandungskraftwerk nach einem der vorangehenden Ansprüche, **dadurch gekennzeichnet, dass** in einem Bereich unterhalb der Drehachse (4) des Wasserrades (2) ein unterer Trichter (20) vorgesehen ist, der sich zu seiner von dem Wasserrad (2) abgewandten Seite öffnet.

8. Brandungskraftwerk nach einem der vorangehenden Ansprüche, **dadurch gekennzeichnet, dass** das Wasserrad (2) über ein Getriebe (7) mit dem Generator (6) gekoppelt ist und/oder dass der Generator (6) mehrere Polpaare aufweist.

9. Brandungskraftwerk nach einem der vorangehenden Ansprüche, **dadurch gekennzeichnet, dass** das Wasserrad (2) eine Rücklaufsperre aufweist, die eine Drehung entgegen einer Solldrehrichtung blockiert und/oder dass es über einen Freilauf mit dem Generator (6) gekoppelt ist.

10. Verfahren zur Stromerzeugung, **dadurch gekennzeichnet, dass** das Tragegestell (3) eines Brandungskraftwerks (1) nach einem der vorangehenden Ansprüche an einem Meeresgrund (24) derart verankert oder durch die oder eine an dem Meeresgrund (24) angeordnete Basis (13) derart gehaltert wird, dass einströmende Wellen und/oder rückströmendes Meerwasser das Wasserrad (2) antreiben, wobei der Generator (6) durch das Wasserrad (2) angetrieben wird, um Strom zu erzeugen.

## Claims

1. Surf power plant comprising a water wheel (2) which is able to be rotated by surf water, a carrying framework (3) on which the water wheel (2) is rotatably mounted, and a generator (6) for providing electricity when the water wheel (2) is rotated, wherein the surf power plant (1) has a deflecting element (10) for guiding the water about an axis of rotation (4) of the water wheel (2), wherein the carrying framework (3) is mounted on a base (13) so as to be pivotable about a pivot axis (14), wherein the pivot axis (14) extends parallel to the axis of rotation (4) of the water wheel (2), wherein, between the pivot axis (14) and the water wheel (2), a plate-shaped guide element (17) is fastened to the carrying framework (3), **characterized in that** the guide element (17) is pivotably fastened to the carrying framework (3).

2. Surf power plant according to Claim 1, **characterized in that** the deflecting element (10) partially surrounds the water wheel (2) radially.

3. Surf power plant according to either of the preceding claims, **characterized in that** at least one float body (15) is fastened to the carrying framework (3), said float body having a lower density than water or being filled or able to be filled with a fluid which has a lower density than water.

4. Surf power plant according to Claim 3, **characterized in that** a water-tight ballast container (16) is attached to the carrying framework (3).

5. Surf power plant according to one of the preceding claims, **characterized in that** the deflecting element (10) is at least sectionally arranged on a side of the water wheel (2) that faces away from the pivot axis (14).

6. Surf power plant according to one of the preceding claims, **characterized in that** said surf power plant has an upper funnel (19) in a region above the guide element (17), which upper funnel opens on its side facing away from the water wheel (2).

7. Surf power plant according to one of the preceding claims, **characterized in that** a lower funnel (20) is provided in a region below the axis of rotation (4) of the water wheel (2), which lower funnel opens on its side facing away from the water wheel (2).

8. Surf power plant according to one of the preceding claims, **characterized in that** the water wheel (2) is coupled to the generator (6) via a gear mechanism (7), and/or **in that** the generator (6) has multiple pole pairs.

9. Surf power plant according to one of the preceding claims, **characterized in that** the water wheel (2) has a return stop which blocks a rotation counter to a desired direction of rotation, and/or **in that** it is coupled to the generator (6) via a freewheel.

10. Method for generating electricity, **characterized in that** the carrying framework (3) of a surf power plant (1) according to one of the preceding claims is anchored to the sea bed (24), or is held by the or a base (13) arranged on the sea bed (24), in such a way that waves flowing in and/or sea water flowing back drive(s) the water wheel (2), wherein the generator (6) is driven by the water wheel (2) in order to generate electricity.

## Revendications

1. Centrale houlomotrice, comprenant une roue hydraulique (2) pouvant être mise en rotation par l'eau d'une houle, un bâti de support (3) sur lequel la roue hydraulique (2) est montée de manière rotative, et un générateur (6) pour fournir de l'électricité lors d'une rotation de la roue hydraulique (2), la centrale houlomotrice (1) présentant un élément de déviation (10) pour guider l'eau autour d'un axe de rotation (4) de la roue hydraulique (2), le bâti porteur (3) étant monté sur une base (10) de manière pivotante autour d'un axe de pivotement (14), l'axe de pivotement (14) s'étendant parallèlement à l'axe de rotation (4) de la roue hydraulique (2), un élément de conduction (17) en forme de plaque étant fixé au bâti porteur (3) entre l'axe de pivotement (14) et la roue hydraulique (2), **caractérisée en ce que** l'élément de conduction (17) est fixé de manière pivotante au bâti porteur (3).

2. Centrale houlomotrice selon la revendication 1, **caractérisée en ce que** l'élément de déviation (10) entoure partiellement radialement la roue hydraulique (2) .

3. Centrale houlomotrice selon l'une quelconque des revendications précédentes, **caractérisée en ce qu'**au moins un corps flottant (15) présentant une densité inférieure à celle de l'eau ou étant rempli ou pouvant être rempli d'un fluide présentant une densité inférieure à celle de l'eau est fixé au bâti porteur (3).

4. Centrale houlomotrice selon la revendication 3, **caractérisée en ce qu'**un réservoir de ballast (16) étanche à l'eau est placé sur le bâti de support (3).

5. Centrale houlomotrice selon l'une quelconque des revendications précédentes, **caractérisée en ce que** l'élément de déviation (10) est agencé au moins par sections sur un côté de la roue hydraulique (2) détourné de l'axe de pivotement (14).

6. Centrale houlomotrice selon l'une quelconque des revendications précédentes, **caractérisée en ce qu'**elle présente un entonnoir supérieur (19) dans une zone au-dessus de l'élément de conduction (17), qui s'ouvre vers son côté détourné de la roue hydraulique (2).

7. Centrale houlomotrice selon l'une quelconque des revendications précédentes, **caractérisée en ce qu'**un entonnoir inférieur (20) est prévu dans une zone en dessous de l'axe de rotation (4) de la roue hydraulique (2), qui s'ouvre vers son côté détourné de la roue hydraulique (2).

8. Centrale houlomotrice selon l'une quelconque des revendications précédentes, **caractérisée en ce que** la roue hydraulique (2) est couplée au générateur (6) par l'intermédiaire d'une transmission (7) et/ou **en ce que** le générateur (6) présente plusieurs paires de pôles.

9. Centrale houlomotrice selon l'une quelconque des revendications précédentes, **caractérisée en ce que** la roue hydraulique (2) présente un dispositif anti-retour qui bloque une rotation à l'encontre d'une direction de rotation de consigne et/ou **en ce qu'**elle est couplée au générateur (6) par l'intermédiaire d'une roue libre.

10. Procédé de production d'électricité, **caractérisé en ce que** le bâti de support (3) d'une centrale houlomotrice (1) selon l'une quelconque des revendications précédentes est ancré à un fond marin (24) ou est supporté par la ou une base (13) agencée sur le fond marin (24) de telle sorte que des vagues affluant et/ou de l'eau de mer refluant entraînent la roue hydraulique (2), le générateur (6) étant entraîné par la roue hydraulique (2) pour produire de l'électricité.
